# EUROPEAN PATENT SPECIFICATION

(11) **EP 2 623 739 B1**
(45) Date of publication and mention of the grant of the patent: **28.01.2015**
(21) Application number: 13153936.3
(22) Date of filing: 04.02.2013
(51) Int. Cl.: F01N 3/20, F01N 13/18

(54) **Device for connecting an injector in an exhaust system of an internal combustion engine**
Vorrichtung zum Verbinden eines Injektors in einem Abgassystem in einem Verbrennungsmotor
Dispositif pour relier un injecteur dans un système d'échappement de moteur à combustion interne

(30) Priority: 03.02.2012 IT BO20120052
(43) Date of publication of application: 07.08.2013
(73) Proprietor: Magneti Marelli S.p.A., Corbetta (MI) (IT)
(72) Inventor: Osbat, Giovanni, 48025 Riolo Terme (IT); Nesci, Walter, 40037 Sasso Marconi (IT)
(74) Representative: Boggio, Luigi

(56) References cited:
- EP-A1- 2 105 592
- EP-A1- 2 192 283
- DE-A1-102006 061 733

## Description

The present invention relates to a device for connecting an injection in an exhaust system of an internal combustion engine provided with exhaust gas post-treatment.

In particular, the present invention is advantageously, but not exclusively applied to an electromagnetic injector, to which explicit reference will be made in the following description without therefore loosing in generality.

As known, future international standards related to the containment of automotive polluting gas emissions (the so-called "Euro 5" and "Euro 6" or "Tier 2 Bin 5" standards) will contemplate a very low limit for the NOₓ molecules which may be released into the atmosphere.

Respecting such limits is particularly critical, especially for Diesel engines; for such a reason, it has been suggested to equip the exhaust system of a Diesel engine with a further SCR (Selective Catalytic Reduction) catalyzer adapted to convert the NOₓ (NO₂ or NO) molecules into nitrogen (N₂), which is an inert gas, and water (H₂O). The reduction reaction of NOₓ molecules into nitrogen (N) is difficult to obtain without using an appropriate reducing agent, which is generally ammonia (NH3). The reducing agent must be injected into the exhaust system upstream of the SCR catalyzer in order to be mixed with the exhaust gases before entering the SCR catalyzer.

However, storing ammonia in a car is not advisable due to evident safety reasons related to the fact that ammonia is toxic. Therefore, it has been suggested to store and inject an aqueous urea solution, because urea is broken down into ammonia due the exhaust gas heat and also in part due to a catalytic effect.

For injecting the aqueous urea solution upstream of the SCR catalyzer, it has been suggested to use an electromagnetic injector entirely equivalent to the electromagnetic injectors currently used for injecting fuel into internal combustion engines. Thereby, existing components of proven efficacy and reliability may be used, and thus there is no need to develop new components, with evident saving of both costs and time. However, the assembly of an electromagnetic injector designed for injecting fuel and arranged an exhaust duct immediately upstream of an SCR catalyzer has been proven to be particularly problematic, because the temperatures inside the exhaust duct are very high (from a minimum of about 150°C to a maximum of about 900°C during steps of regeneration), and an undue overheating of the electromagnetic injector may be produced, with consequent destruction of the electromagnetic injector itself. By way of example, the temperature of the outer jacket of a currently manufactured electromagnetic injector must not exceed about 150°C to avoid melting the insulation of the copper wire forming the electromagnetic coil, while the nose of a currently manufactured electromagnetic injector must not exceed about 25°C to avoid steel annealing phenomena, which could alter the mechanical properties thereof.

Furthermore, it is worth noting that in addition to ensuring an adequate thermal insulation of the electromagnetic injector from the heat of the exhaust system, it is also necessary to simultaneously ensure an effective disposal of the heat which is transmitted by conduction and irradiation to the injector and of the heat produced due to the Joule effect by the coil of the electromagnet inside the electromagnetic injector.

In order to overcome these drawbacks, connection devices of an injector in an exhaust system have been suggested, the connection devices being provided with a heat dissipation element arranged to ensure an adequate thermal insulation of the injector itself from the heat of the exhaust system while allowing an effective heat disposal.

For example, patent application EP-A1-2105592 describes a connection device of an injector in an exhaust system of an internal combustion engine which is provided with a tubular support body, which is made of thermally conductive material, accommodates the injector therein, and at a lower end thereof is adapted to be coupled to a connection pipe which laterally protrudes from an exhaust duct of the exhaust system. The support body of the connection device has a plurality of radial fins which work as heat dissipation element adapted to increase the heat exchange surface and are uniformly distributed over the whole length of the support body.

However, the connection devices of an injector in an exhaust system made according to patent application EP-A1-2105592 have some drawbacks. In particular, the vibrations which, in use, are transmitted to the heat dissipation device may accidentally cause the failure of the heat dissipation device itself (i.e. of the radial fins).

It is thus the object of the present invention to provide a connection device of an injector in an exhaust system of an internal combustion engine provided with exhaust gas post-treatment which is free from the drawbacks of the prior art while being easy and cost-effective to be manufactured, and in particular which allows to avoid undesired failures of the heat dissipation device.

In accordance with the present invention, a connection device of an injector in an exhaust system of an internal combustion engine is provided as claimed in the appended claims.

The present invention will now be described with reference to the accompanying drawings, which show a non-limitative embodiment thereof, in which:
- figure 1 is a diagrammatic view of an exhaust system of an internal combustion engine provided with exhaust gas post-treatment; and
- figure 2 is a diagrammatic, side section view of a connection device of an injector in the exhaust system in figure 1, which connection device is provided in accordance with the present invention.

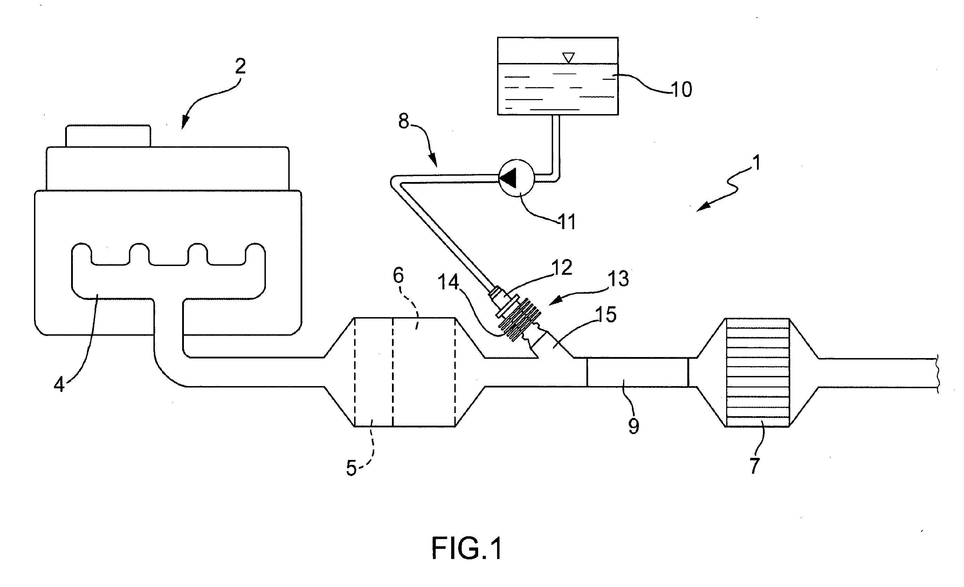

In figure 1, numeral 1 indicates as a whole an exhaust system of an internal combustion engine 2 working in accordance with the "Diesel" cycle (i.e. fed with diesel fuel or the like).

The exhaust system 1 emits the gases produced by combustion into the atmosphere and comprises an exhaust duct 3 which departs from an exhaust manifold 4 of the internal combustion engine 2. An oxidizing catalyzer 5 and a particulate filter 6 are arranged along the exhaust duct 3. In figure 1, the oxidizing catalyzer 5 and the particulate filter 6 are sequentially arranged within a same common tubular container.

Furthermore, an SCR (Selective Catalytic Reduction) catalytic system 7 for the post-treatment of the NOₓ molecules (NO and NO₂) is arranged along the exhaust duct 3 and downstream of the oxidizing catalyzer 5. According to a variant shown in figure 1, the SCR catalytic system 7 comprises a single SCR catalyzer 7. According to a further variant (not shown), the SCR catalytic system 7 comprises a set of catalyzers (normally three catalyzers), which together optimize the SCR function for post-treatment of NOₓ molecules.

An injection device 8, coupled to the exhaust duct 3 is provided immediately upstream of the catalytic system 7, and is adapted to inject a reducing additive, and in particular an aqueous urea solution (i.e. a solution of urea and water) into the exhaust duct 3 itself. In use, due to the heat of the exhaust gases inside the exhaust duct 3, the urea injected into the exhaust duct 3 itself spontaneously breaks down into isocyanic acid (HNCO) and ammonia (NH3), which ammonia works as a reducing agent in the catalytic system 7 to promote the breakdown reaction of the NOₓ molecules into nitrogen (N₂) and water (H₂O).

A static mixer 9 is inserted along the exhaust duct 3 and at the injection device 8, which mixer has the function of generating turbulences in the exhaust gases inside the exhaust duct 3 in order to prevent the localized thickening of the isocyanic acid (which is formed when urea breaks down) and thus to prevent the polymerization of the isocyanic acid itself and so as to increase the efficiency of the catalytic system 7, thus making the dispersion of ammonia more homogenous in the exhaust gases. According to the variant shown in figure 1, the static mixer 9 is arranged downstream of the injection device 8. According to a further variant (not shown), the static mixer 9 is arranged upstream of the injection device 8.

The injection device 8 comprises a tank 10 containing the aqueous urea solution, and a pump 11 which draws from the tank 10 to feed the pressurized aqueous urea solution to an electromagnetic injector 12 of known type adapted to inject the pressurized aqueous urea solution into the exhaust duct 3.

The electromagnetic injector 12 is fixed to the exhaust duct 3 by means of a connection device 13 which comprises a tubular support body 14, which is made of thermally conductive material (typically steel), accommodates the electromagnetic injector 12 therein, and at a lower end thereof is adapted to be butt-coupled to a connection pipe 15 which laterally and obliquely protrudes from the exhaust duct 3.

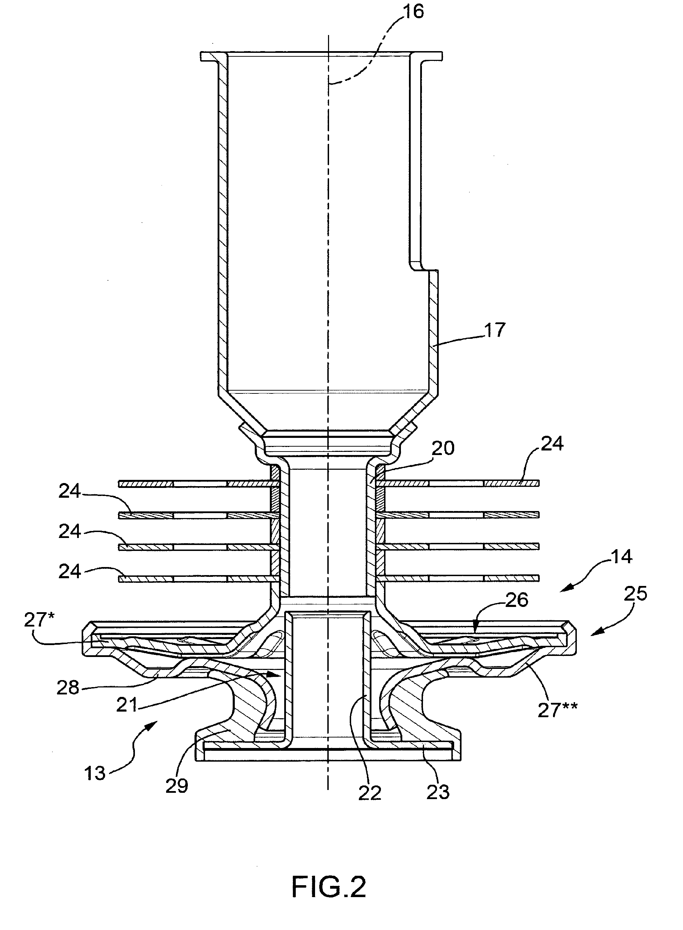

As shown in greater detail in figure 2, the connection device 13 and the electromagnetic injector 12 (not shown in figure 2), which is controlled to inject the aqueous urea solution by means of an injection nozzle, substantially have a cylindrical symmetry about a longitudinal symmetry axis 16. The electromagnetic injector 12 comprises a nose which ends with the injection nozzle, and a jacket which is fixed to an end of the nose opposite to the injection nozzle and has a diameter larger than the diameter of the nose. In particular, the jacket of the electromagnetic injector 12 accommodates an electromagnet and at least one spring, both acting on a movable keeper, while the nose of the electromagnetic injector 12 accommodates a pin, which is integral with the movable keeper on one side and which supports a shutter adapted to close the injection nozzle on the other.

The connection device 13 preferably comprises a substantially tubular-shaped covering element 17, coaxial to the longitudinal axis 16, adapted to protect the jacket of the electromagnetic injector 12 and made of a material suitable to withstand the heat conditions of the environment in which the electromagnetic injector 12 works. Such a covering element 17 also serves a heat screening function for the electric connector (not shown) of the electromagnetic injector 12.

The nose of the electromagnetic injector 12 is completely inserted into the support body 14, while the jacket of the electromagnetic injector 12 is arranged substantially outside the support body 14 and protected by the covering element 17.

An upper portion of the support body 14 is thermally coupled to an upper portion of the nose of the electromagnetic injector 12, so that a high heat exchange occurs by conduction and radiation between the upper portion of the nose of the electromagnetic injector 12 and the upper portion of the support body 14; instead, a lower portion of the support body 14 is thermally insulated from a lower portion of the nose of the electromagnetic injector 12, so that a low heat exchange occurs by conduction and irradiation between the lower portion of the nose of the electromagnetic injector 12 and the lower portion of the support body 14.

In particular, a tubular conductive element 20, which is made of thermally conductive material (typically made of steel), is included and arranged within the support body 14 at the upper portion of the support body 14 and maintains, in use, the upper portion of the electromagnetic injector 12 thermally coupled to the support body 14. The tubular conductive element 20 preferably consists of a metal material tube having an outer diameter substantially equal to the inner diameter of the support body 14, so that there is no air gap between the outer surface of the conductive element 20 and the inner surface of the support body 14. Similarly, the inner diameter of the tubular conductive element 20 is substantially equal to the outer diameter of the nose of the electromagnetic injector 12, so that there is no air gap between the inner surface of the conductive element 20 and the outer surface of the nose of the electromagnetic injector 12.

Moreover, a tubular insulating element 21 is included, which is made of thermally insulating material, is arranged at a lower end of the support body 14 at the lower portion of the support body 14, and maintains the lower portion of the nose of the electromagnetic injector 12 thermally insulated from the support body 14. The tubular insulating element 21 preferably consists of a winding or bushing made of thermally insulating material (or possibly also of thermally conductive material) and comprises a central tubular body 22. The insulating element 21 further has an end flange 23, arranged at a lower end thereof and arranged transversally to the central body 22.

According to a preferred embodiment, the support body 14 comprises a heat dissipation device 24 which has, in turn, a plurality of dissipating fins 24 having the function of increasing the heat exchange surface.

The dissipating fins 24 have a radial shape, are arranged coaxial to the longitudinal axis 16 and project outwards from the support body 14. In particular, each dissipation fin 24 has a discoid shape arranged orthogonal to the longitudinal axis 16.

The dissipation fins 24 are uniformly distributed both at the lower portion of the support body 14 and at the upper portion of the support body 14. According to a further embodiment (not shown), the dissipation fins 24 may reach the jacket of the electromagnetic injector 12 at the electromagnet coil.

According to a preferred variant, the heat dissipation device 24 comprises four radial dissipation fins 24. Indeed, it has been determined that a number of radial fins equal to 4 allows to optimize the available heat exchange surface.

The connection device 13 further comprises a damping device 25 for the vibrations which are transmitted to the heat dissipation device 24 and which could accidentally cause the failure of the dissipation fins 24. The damping device 25 comprises a number of elastic elements coaxial to the longitudinal symmetry axis 26 and accommodated at the lower portion of the support body 14. The elastic elements 26 projects outwards from the support body 14 and their outer diameter substantially approximates the outer diameter of the plurality of the radial dissipation fins 24. In particular, the damping device 25 comprises a pair of plates 27*, 27** facing each other and both coaxial to the longitudinal axis 16 so as to define an upper plate 27* and a lower plate 27**. The lower plate 27** has an annular edge which is folded on the upper plate 27* so as to form a reinforced rib.

The two upper and lower plates 27* and 27** are arranged so as to substantially copy the profile of a leaf spring.

According to a preferred variant, the vibration damping device 25 comprises a number of projections or bulges 28 arranged coaxial to the longitudinal axis 16 and uniformly distributed about the longitudinal axis 16. The bulges 28 may be obtained, according to mutually alternative variants, in the upper plate 27* and/or in the lower plate 27** so as to project towards the pump 11 and/or towards the connection tube 15. Thereby, a plurality of air chambers are obtained between the directly facing surfaces of the upper plate 27* and of the lower plate 27**.

According to a further variant, the plurality of bulges 28 are replaced by a single annular projection coaxial to the longitudinal axis 16 obtained, according to mutually alternative variants, in the upper plate 27* and/or in the lower plate 27**, so as to project towards the pump 11 and/or towards the connection tube 15.

Thereby, an air gap is present between the directly facing surfaces of the upper plate 27* and of the lower plate 27**.

Furthermore, it is worth noting that the lower plate 27** is substantially arranged at the tubular insulating element 21 and, in particular, faces the vicinity of the tubular central body 22 and is slightly spaced therefrom so as to define an air passageway. In other words, the tubular central body 22 has an outer diameter slightly smaller than the inner diameter of the elastic elements 26.

According to a preferred embodiment, the lower end of the support body 14 is thermally insulated from the connection pipe 15, so that a low heat exchange occurs by conduction between the lower end of the support body 14 and the connection pipe 15. In particular, an insulating body 29 is provided, having cylindrical symmetry and being coaxial to the longitudinal axis 16. The insulating body 29 is made of thermally insulating material (or of thermally conductive material and has a low contact surface) and is interposed between the lower end of the support body 14 and the connection pipe 15. Preferably, the annular body 29 is coaxial to the longitudinal axis 16, also acts as sealing element, and is compressed to seal all passageways present so as to avoid leakages.

According to a possible embodiment, an insulating ring is interposed between the insulating element 21 and the conductive element 20, the insulating ring being made of thermally insulating material and having the function of increasing the heat insulation between the insulating element 21 and the conductive element 20.

According to a possible variant (not shown), the connection device 13 comprises a protective screen, which has a discoid shape, is arranged at a lower end of the tubular body 14, has an outer diameter larger than the outer diameter of the dissipation fins 24, and has the function of avoiding the heat transmission by radiation from the exhaust duct 3 towards the dissipation fins 24 themselves.

The above-described connection device 13 has many advantages, because it is simple and cost-effective to be implemented, is particularly robust (and thus has a high working life and very low failure risk), allows to provide an effective insulation of the electromagnetic injector from the heat present in the exhaust duct 3, and in particular allows to damp the vibrations transmitted to the heat dissipation device 24 which could otherwise cause the failure of the radial dissipation fins 24.

## Claims

1. A device (13) for connecting an injector (12) for an exhaust system (1) in an internal combustion engine (2); said exhaust system (1) comprises an exhaust duct (3) and a connection pipe (15), which laterally protrudes from the exhaust duct (3); the connection device (13) comprises:
a tubular support body (14), which is provided with a longitudinal symmetry axis (16), is made of a thermally conductive material, is adapted to accommodate the injector (12) therein, and at a lower end thereof, is adapted to be coupled to the connection pipe (15);
an upper portion of the support body (14), which is suitable to be thermally coupled to an upper portion of a nose of the injector (12), so that a high heat exchange occurs between the upper portion of the nose of the injector (12) and the upper portion of the support body (14);
a lower portion of the support body (14), which is suitable to be thermally insulated from a lower portion of the nose of the injector (12), so that a low heat exchange occurs by conduction between the lower portion of the nose of the injector (12) and the lower portion of the support body (14);
the support body (14) comprises a heat dissipation device (24), provided with a plurality of radial dissipation fins (24) which are coaxial to the longitudinal symmetry axis (16), project outwards from the support body (14), and have the function of increasing the heat exchange surface;
the connection device is **characterized in that** it further comprises a device (25) for damping the vibrations transmitted to the heat dissipation device (24), which comprises, in turn, elastic elements (26) coaxial to the longitudinal symmetry axis (16) and accommodated at the lower portion of the support body (14); the elastic elements (26) comprise a pair of plates (27) which face each other and are both coaxial to the longitudinal symmetry axis (16) so as to define an upper plate (27*) and a lower plate (27*), and wherein the elastic elements (26) project outwards from the support body (14) and their outer diameter substantially approximates the outer diameter of the plurality of radial dissipation fins (24).

2. A connection device according to claim 1, wherein the elastic elements (26) substantially copy the profile of a leaf spring.

3. A connection device according to one of the preceding claims, wherein the vibration damping device (25) comprises an annular projection, which is coaxial to the longitudinal symmetry axis (16).

4. A connection device according to claim 1 or 2, wherein the vibration damping device (25) comprises a number of bulges, which are coaxial to the longitudinal symmetry axis (16).

5. A connection device according to claim 4, wherein the bulges (28) are uniformly distributed about the longitudinal symmetry axis (16).

6. A connection device according to one of the preceding claims, wherein the projection or bulges (28) are obtained in the lower plate (27**) and project towards the connection pipe (15).

7. A connection device according to one of the preceding claims, wherein the heat dissipation device (24) comprises a plurality of radial dissipation fins (24), which are coaxial to the longitudinal symmetry axis (16), project outwards from the support body (14) and have the function of increasing the thermal exchange surface.

8. A connection device according to claim 7, wherein the heat dissipation device (24) comprises four radial dissipation fins (24).

9. A connection device according to claim 7 or 8, wherein the radial dissipation fins (24) are uniformly distributed over the whole length of the support body (14).

10. A connection device according to one of the claims from 7 to 9, wherein each radial dissipation fin (24) is discoid-shaped and arranged orthogonal to the longitudinal symmetry axis (16).

11. A connection device according to one of the claims from 7 to 10, wherein the radial dissipation fins (24) extend to a jacket of the injector (12) at a coil of an electromagnet of the injector (12).

12. A connection device according to one of the claims from 7 to 11 and comprising a protective screen, which is arranged at a lower end of the support body (14), has an outer diameter larger than the outer diameter of the radial dissipation fins (24), and has the function of preventing the heat transmission by radiation towards the radial dissipation fins (24) themselves.

13. A connection device according to one of the preceding claims, wherein the support body (14) is provided so as to completely accommodate a nose of the injector (12) therein, whereas a jacket of the injector (12) is substantially arranged outside said support body (14).

## Patentansprüche

1. Vorrichtung (13) zum Verbinden eines Injektors (12) für ein Abgassystem (1) in einem Verbrennungsmotor (2); welches Abgassystem (1) eine Abgasleitung (3) und ein Verbindungsrohr (15) aufweist, welches von der Abgasleitung (3) seitlich vorragt; welche Verbindungsvorrichtung (13) umfasst:
einen rohrförmigen Haltekörper (14), der mit einer Längs-Symmetrieachse (16) versehen ist, aus einem wärmeleitfähigen Material hergestellt ist, dafür ausgelegt ist, den Injektor (12) in sich aufzunehmen, und an seinem unteren Ende dafür ausgelegt ist, mit dem Verbindungsrohr (15) gekoppelt zu werden;
einen oberen Teil des Haltekörpers (14), der dafür geeignet ist, mit einem oberen Teil einer Nase des Injektors (12) thermisch gekoppelt zu werden, so dass zwischen dem oberen Teil der Nase des Injektors (12) und dem oberen Teil des Haltekörpers (14) ein hoher Wärmeaustausch auftritt;
einen unteren Teil des Haltekörpers (14), der dafür geeignet ist, von einem unteren Teil der Nase des Injektors (12) thermisch isoliert zu werden, so dass zwischen dem unteren Teil der Nase des Injektors (12) und dem unteren Teil des Haltekörpers (14) ein geringer Wärmeaustausch durch Leitung auftritt;
wobei der Haltekörper (14) eine Wärmeabführungseinrichtung (24) aufweist, die mit einer Vielzahl von radialen Abführungsrippen (24) versehen ist, welche zu der Längs-Symmetrieachse (16) symmetrisch sind, von dem Haltekörper (14) nach außen vorragen und die Funktion haben, die Wärmeaustauschfläche zu vergrößern;
wobei die Verbindungsvorrichtung **dadurch gekennzeichnet ist, dass** sie ferner eine Einrichtung (25) zum Dämpfen der auf die Wärmeabführungseinrichtung (24) übertragenen Vibrationen aufweist, welche wiederum elastische Elemente (26) aufweist, die zu der Längs-Symmetrieachse (16) koaxial sind und an dem unteren Teil des Haltekörpers (14) untergebracht sind; wobei die elastischen Elemente (26) ein Paar Platten (27) umfassen, welche einander gegenüberliegen und beide zu der Längs-Symmetrieachse (16) symmetrisch sind, so dass sie eine obere Platte (27*) und eine untere Platte (27**) bilden, und wobei die elastischen Elemente (26) von dem Haltekörper (14) nach außen vorragen und ihr Außendurchmesser im wesentlichen an den Außendurchmesser der Vielzahl der radialen Abführungsrippen (24) angenähert ist.

2. Verbindungsvorrichtung nach Anspruch 1, wobei die elastischen Elemente (26) im Wesentlichen das Profil einer Blattfeder nachbilden.

3. Verbindungsvorrichtung nach einem der vorhergehenden Ansprüche, wobei die Vibrationsdämpfungseinrichtung (25) einen ringförmigen Vorsprung aufweist, der zu der Längs-Symmetrieachse (16) koaxial ist.

4. Verbindungsvorrichtung nach Anspruch 1 oder 2, wobei die Vibrationsdämpfungseinrichtung (25) eine Anzahl von Ausbauchungen aufweist, die zu der Längs-Symmetrieachse (16) koaxial sind.

5. Verbindungsvorrichtung nach Anspruch 4, wobei die Ausbauchungen (28) über die Längs-Symmetrieachse (16) gleichmäßig verteilt sind.

6. Verbindungsvorrichtung nach einem der vorhergehenden Ansprüche, wobei die Vorsprünge oder Ausbauchungen (28) in der unteren Platte (27**) erhalten werden und zu dem Verbindungsrohr (15) hin vorspringen.

7. Verbindungsvorrichtung nach einem der vorhergehenden Ansprüche, wobei die Wärmeabführungseinrichtung (24) eine Vielzahl von radialen Abführungsrippen (24) aufweist, die zu der Längs-Symmetrieachse (16) koaxial sind, von dem Haltekörper (14) nach außen vorragen und die Funktion haben, die Wärmeaustauschoberfläche zu vergrößern.

8. Verbindungsvorrichtung nach Anspruch 7, wobei die Wärmeabführungseinrichtung (24) vier radiale Abführungsrippen (24) umfasst.

9. Verbindungsvorrichtung nach Anspruch 7 oder 8, wobei die radialen Abführungsrippen (24) über die gesamte Länge des Haltekörpers (14) gleichmäßig verteilt sind.

10. Verbindungsvorrichtung nach einem der Ansprüche von 7 bis 9, wobei jede radiale Abführungsrippe (24) scheibenförmig ist und senkrecht zur Längs-Symmetrieachse (16) angeordnet ist.

11. Verbindungsvorrichtung nach einem der Ansprüche von 7 bis 10, wobei die radialen Abführungsrippen (24) sich zu einem Mantel des Injektors (12) an einer Spule eines Elektromagneten des Injektors (12) erstrecken.

12. Verbindungsvorrichtung nach einem der Ansprüche von 7 bis 11, enthaltend einen Schutzschirm, der an einem unteren Ende des Haltekörpers (14) angeordnet ist, einen Außendurchmesser hat, der größer ist als der Außendurchmesser der radialen Abführungsrippen (24) und die Funktion hat, die Wärmeübertragung durch Strahlung zu den radialen Abführungsrippen (24) selbst zu verhindern.

13. Verbindungsvorrichtung nach einem der vorhergehenden Ansprüche, wobei der Haltekörper (14) so vorgesehen ist, dass er eine Nase des Injektors (12) vollständig in sich aufnimmt, wohingegen ein Mantel des Injektors (12) im Wesentlichen außerhalb des Haltekörpers (14) angeordnet ist.

## Revendications

1. Dispositif (13) pour le raccordement d'un injecteur (12) pour un système d'échappement (1) dans un moteur à combustion interne (2) ; lequel système d'échappement (1) comprend une conduite d'échappement (3) et un tube de raccordement (15), qui dépasse latéralement depuis la conduite d'échappement (3) ; lequel dispositif de raccordement (13) comprend :
un corps de support tubulaire (14), qui est pourvu d'un axe de symétrie longitudinal (16), est constitué d'un matériau thermiquement conducteur, est adapté pour loger l'injecteur (12) en son sein, et à une extrémité inférieure de celui-ci, est adapté pour être couplé, au tube de raccordement (15) ;
une partie supérieure du corps de support (14), qui est appropriée pour être thermiquement couplée à une partie supérieure d'un nez de l'injecteur (12), de telle sorte qu'il se produise un fort échange de chaleur entre la partie supérieure du nez de l'injecteur (12) et la partie supérieure du corps de support (14) ;
une partie inférieure du corps de support (14), qui est appropriée pour être thermiquement isolée d'une partie inférieure du nez de l'injecteur (12), de telle sorte qu'il se produise un faible échange de chaleur par conduction entre la partie inférieure du nez de l'injecteur (12) et la partie inférieure du corps de support (14) ;
le corps de support (14) comprend un dispositif de dissipation de chaleur (24), pourvu d'une pluralité d'ailettes de dissipation radiales (24) qui sont coaxiales à l'axe de symétrie longitudinal (16), font saillie vers l'extérieur depuis le corps de support (14), et ont pour fonction d'augmenter la surface d'échange de chaleur ;
le dispositif de raccordement est **caractérisé en ce qu'**il comprend en outre un dispositif (25) pour amortir les vibrations transmises au dispositif de dissipation de la chaleur (24), qui comprend, quant à lui, des éléments élastiques (26) coaxiaux à l'axe de symétrie longitudinal (16) et logés au niveau de la partie inférieure du corps de support (14) ; les éléments élastiques (26) comprennent une paire de plaques (27) qui se font face et qui sont toutes les deux coaxiales à l'axe de symétrie longitudinal (16) de façon à définir une plaque supérieure (27*) et une plaque inférieure (27**), et dans lequel les éléments élastiques (26) font saillie vers l'extérieur depuis le corps de support (14) et leur diamètre extérieur se rapproche sensiblement du diamètre extérieur de la pluralité d'ailettes de dissipation radiales (24).

2. Dispositif de raccordement selon la revendication 1, dans lequel les éléments élastiques (26) reproduisent sensiblement le profil d'un ressort à lames.

3. Dispositif de raccordement selon l'une des revendications précédentes, dans lequel le dispositif d'amortissement de vibrations (25) comprend une saillie annulaire, qui est coaxiale à l'axe de symétrie longitudinal (16).

4. Dispositif de raccordement selon la revendication 1 ou 2, dans lequel le dispositif d'amortissement des vibrations (25) comprend un certain nombre de renflements, qui sont coaxiaux à l'axe de symétrie longitudinal (16).

5. Dispositif de raccordement selon la revendication 4, dans lequel les renflements (28) sont répartis uniformément autour de l'axe de symétrie longitudinal (16).

6. Dispositif de raccordement selon l'une des revendications précédentes, dans lequel la saillie ou les renflements (28) sont obtenus dans la plaque inférieure (27**) et font saillie vers le tube de raccordement (15).

7. Dispositif de raccordement selon l'une des revendications précédentes, dans lequel le dispositif de dissipation de la chaleur (24) comprend une pluralité d'ailettes de dissipation radiales (24), qui sont coaxiales à l'axe de symétrie longitudinal (16), font saillie vers l'extérieur depuis le corps de support (14) et ont pour fonction d'augmenter la surface d'échange thermique.

8. Dispositif de raccordement selon la revendication 7, dans lequel le dispositif de dissipation de la chaleur (24) comprend quatre ailettes de dissipation radiales (24).

9. Dispositif de raccordement selon la revendication 7 ou 8, dans lequel les ailettes de dissipation radiales (24) sont réparties uniformément sur toute la longueur du corps de support (14).

10. Dispositif de raccordement selon l'une des revendications 7 à 9, dans lequel chaque ailette de dissipation radiale (24) est de forme discoïde et est disposée orthogonalement à l'axe de symétrie longitudinal (16).

11. Dispositif de raccordement selon l'une des revendications 7 à 10, dans lequel les ailettes de dissipation radiales (24) s'étendent jusqu'à une chemise de l'injecteur (12) au niveau d'une bobine d'un électro-aimant de l'injecteur (12).

12. Dispositif de raccordement selon l'une des revendications 7 à 11, et comprenant un écran protecteur, qui est disposé à une extrémité inférieure du corps de support (14), a un diamètre extérieur supérieur au diamètre extérieur des ailettes de dissipation radiales (24), et a pour fonction d'empêcher la transmission de chaleur par rayonnement vers les ailettes de dissipation radiales (24) elles-mêmes.

13. Dispositif de raccordement selon l'une des revendications précédentes, dans lequel le corps de support (14) est prévu de façon à loger complètement en son sein un nez de l'injecteur (12), tandis qu'une chemise de l'injecteur (12) est sensiblement disposée à l'extérieur dudit corps de support (14).
